Europäisches Patentamt

European Patent Office

Office européen des brevets

(11) Publication number: 0 498 242 A2

# EUROPEAN PATENT APPLICATION

(21) Application number: 92101223.3

(22) Date of filing: 27.01.92

(51) Int. Cl.5: G01F 11/00

(30) Priority: 08.02.91 IT 32691

(43) Date of publication of application:
12.08.92 Bulletin 92/33

(84) Designated Contracting States:
AT BE CH DE ES FR GB IT LI NL PT SE

(71) Applicant: DROPSA S.p.A.
Via Massimiano 25
I-20134 Milano(IT)

(72) Inventor: Divisi, Gualtiero
Via Massimiano, 25
I-20134 Milan(IT)

(74) Representative: Luksch, Giorgio, Dr.-Ing. et al
Ing. A. Giambrocono & C. S.r.l. Via Rosolino
Pilo, 19/b
I-20129 Milano(IT)

(54) **System for distributing lubricant to several users via remotely controlled distributors connected to the same lubricant delivery or distribution line.**

(57) In a system for distributing lubricant fluid to several users, a plurality of known modular flowmeters (F) of the type which measure flow rate in order to control the flow of said fluid are arranged in the same lubricant distribution line (C). These flowmeters each comprise a valve unit (12) for regulating the lubricant fluid feed to the users. The valve units (12) are operated by respective electric motors (30) all controlled by a single control unit (31) which controls said motors (30) and hence the corresponding valves (12) on the basis of the flow rate data determined by at least one evaluation unit (9) connected to usual sensors (8) associated in known manner with the flowmeters (F), this control regulating the fluid feed to the users connected to the flowmeters (F).

The control unit (31) is itself controlled by a remote control unit or station (90) which can operate on each individual flowmeter (F) without halting the operation of the other distributors or flowmeters (F).

Fig. 1

This invention relates to a system for distributing lubricant to several users via a plurality of modular flowmeters.

Each of said modular flowmeters comprises a basic distributor block provided with entry and exit ports and with ducts for delivery to and return from a measurement block removably supported by the distributor block, this latter being provided with a valve unit for regulating the fluid flow to the measurement block; the measurement block comprises a member orbiting eccentrically within its chamber and means for guiding the movement of said member.

Sensor means are connected to the measurement block to measure the movement of said member, said sensor means being connected to an evaluation unit which on the basis of the rotational speed of the member orbiting within its chamber is able to determine the volumetric throughput of the fluid transiting within the distributor block.

Such a flowmeter is already known and is the subject of a preceding patent application in the name of the present applicant.

This flowmeter is usefully used in all those cases in which a precisely metered quantity of lubricant is to be fed to a user, such as a machine tool part.

With particular reference to machines operating on a continuous cycle basis, such as paper mill or rolling mill machines, these have to be lubricated at several points with fluid advantageously originating from a single distribution line. For this purpose it is known to use from a single line several flowmeters connected to terminal lubricant lines connected to corresponding users.

This solution allows proper lubrication of these latter but suffers from various drawbacks.

Firstly, when a pressure drop occurs within a terminal lubricant line, it affects all the other lines, and this can result in serious damage to the machine or the part to which the terminal lines are connected.

To prevent such repercussions, the valve unit of the flowmeter connected to the line in which the pressure drop has occurred must be operated to interrupt the connection between the distribution line (delivery line) and the terminal line.

For this purpose the flowmeter is generally adjusted manually, involving a considerable time which can result in damage to the user to which the flowmeter is connected.

Another problem arises when, during the initial stages of operation of a continuous cycle machine (for example within a chain), the lubricant fluid which reaches its various parts (or users) is at different temperatures within the various terminal lines, resulting in different viscosities.

As a result of this, problems concerning the distribution of said fluid to the users can arise, these problems being related to difficulties in the overall coordinated regulation of the various flowmeters in all the terminal lines.

In this respect, it should be noted that known devices exist for controlling the lubricant fluid flow through the various lines on the basis of its temperature. Such devices are however costly and do not allow precise determination of said flow or its accurate metering.

A further problem occurs when a large number of users are to be lubricated. This means that the distribution points cannot be easily and quickly controlled, hence not allowing simple coordinated regulation of the dispensers or flowmeters positioned at these points.

Finally, in those systems comprising continuous cycle machines each having several parts or users to be lubricated via common delivery lines, a fault in a flowmeter at one distribution point often results in stoppage of all the dispensers or flowmeters positioned at the other points.

An object of the present invention is therefore to provide a lubricant system of the type using a plurality of dispensers or flowmeters of the aforesaid type, which obviates the drawbacks of known systems.

A particular object of the invention is to provide a system which enables the lubrication of the various users to be kept always under control, which allows swift and precise detection and resolution of problems relating to flowmeter malfunction and enables damage to any one of these flowmeters to be repaired without halting the operation of the others.

A further object is to provide a system of the aforesaid type which allows optimum lubrication of several users in a machine operating on a continuous cycle bases, even during the initial stages of its operation.

These and further objects which will be apparent to the expert of the art are attained by a system for distributing lubricant fluid to several users via a plurality of modular flowmeters, each comprising a distributor block provided with entry and exit ports and ducts for delivery to and return from a measurement block comprising a chamber within which an orbiting member moves, said distributor block being provided with a valve unit for regulating the fluid flow to the measurement block, each distributor comprising usual sensor means for measuring the movement of the member orbiting within the measurement block and being connected to an evaluation unit which on the basis of signals generated by the system means is able to determine the flow rate of the fluid passing through the distributor block and directed towards a corresponding user connected to said return duct, characterised that the flowmeter valve units are connected to and controlled by corresponding electric motors, these latter being controlled and operated by at least one control unit to which said evaluation units are connected, said control unit receiving from these latter the flow data measured by each individual flowmeter and, on the basis of these data, acting on the valve units of these latter in such a manner as to modify the flow rate of the lubricant fluid fed through said flowmeters to the corresponding users.

The present invention will be more apparent from the accompanying drawing, which is provided by way of non-limiting example and in which:

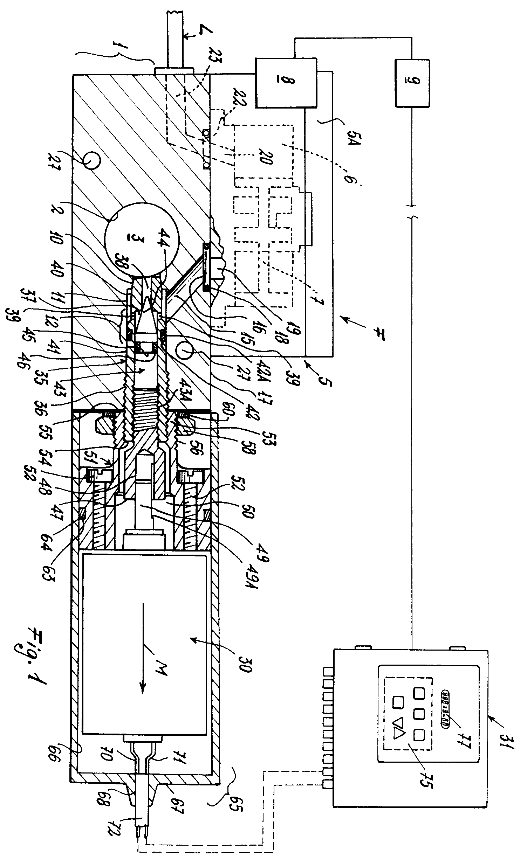

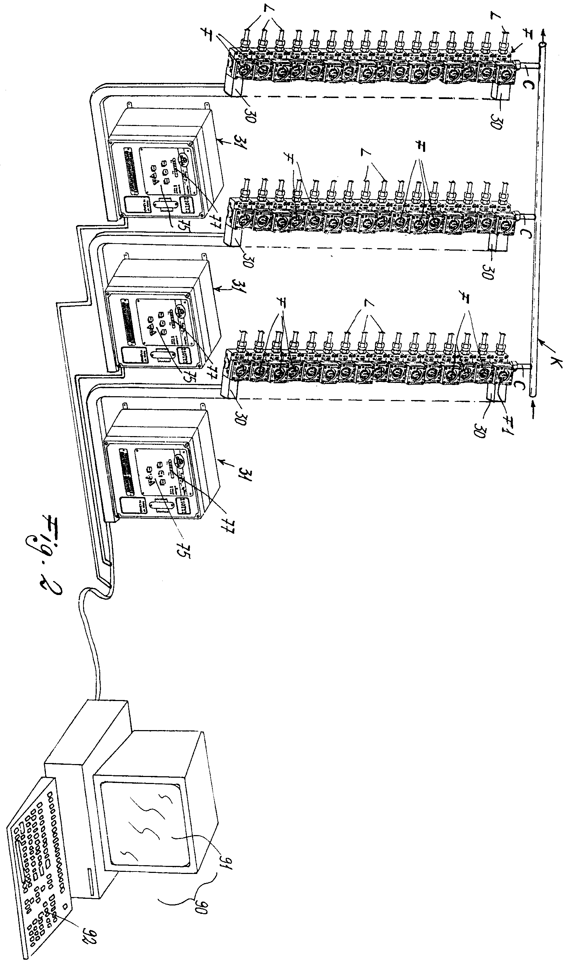

Figure 1 is a partly sectional schematic view of a portion of the system according to the invention; and Figure 2 is an overall schematic view of one embodiment of the invention.

With reference to said figures, the system according to the invention comprises a plurality of modular flowmeters F of the type which measures the flow rate of a lubricant fluid passing through them to control the flow of said fluid to a plurality of users (not shown) to which each flowmeter (also known as a dispenser) F is connected via terminal delivery lines L.

Each flowmeter F is of known type and comprises a known block (as described for example in a preceding patent application in the name of the present applicant) for distributing the lubricant fluid (hence its definition as a distributor) within a lubricant circuit for a corresponding part of a continuous cycle machine used in a paper mill. The block 1 or distributor block comprises a threaded port 2 for the entry of the fluid into a channel 3 which passes through the block 1; said channel comprises a further port or exit (not shown) at the other end to the entry port 2, to receive a connection member (not shown) which enables the block 1 to be connected to a further analogous block connected into a line C of a hydraulic circuit K from which the lubricant fluid originates for direction to the various users.

The distributor block 1 supports a further block 5 (of known type) into which in known manner at least part of the fluid entering the distributor block 1 can flow. Before returning to said distributor block 1, this fluid rotates a substantially cylindrical hollow member or rotor 7 within a circular chamber 6 in the block 5 (known hereinafter as the measurement block); this rotary movement is measured (in known manner) by a proximity sensor 8 of magnetic, inductive or similar type, which is connected to a flow rate evaluation unit 9, advantageously a microprocessor circuit, which on the basis of the data obtained by the sensor 8 and a stored program, measures the volumetric throughput towards a destination point.

Specifically, the distributor block 1 comprises a duct 10 extending from the channel 3 and terminating in a chamber 11 (opening to the outside of the block 1) in which there is a valve unit 12. The unit 12 is able to throttle the duct 10 so as to "dispense" the quantity of lubricant fluid directed from the channel 3 to a duct 15 which terminates in a port 16 present in the surface 17 on which the measurement block 5 is positioned. A usual seal ring 18 is provided at said port 16.

A duct 19 provided in the block 5 is arranged to cooperate with said duct 15. The duct 19 leads into the chamber 6 in which the rotor 7 orbitally moves in known manner.

From the chamber 6 there extends a further duct 20 which terminates at the surface 17.

In this latter there is a port 22 (analogous to said port 16) leading from a duct 23 provided in the distributor block 1 and terminating in an exit port (not shown) to which the terminal line L associated with the distributor under examination is connected, said line leading to the user and conveying the lubricant fluid thereto.

The distributor block also comprises through holes 27 for receiving further fixing members (not shown) for fixing the flowmeter F to other analogous flowmeters, as shown in Figure 2.

The valve unit 12 of each flowmeter or distributor F is operated by a direct current electric motor 30, advantageously of stepping type. All the motors 30 of the plurality of flowmeters F connected into a single pipe C, shown in Figure 2, are connected to a single control unit 31 which controls their operation and acts on each of them in such a manner as to cause the valve unit 12 to undergo a corresponding movement and regulate to the desired extent the quantity of fluid directed to the relative measurement block and hence to the corresponding line L.

Specifically, the valve unit 12 comprises a substantially cylindrical member 35 at least partly threaded at 36. This member has an inner cavity 37 arranged to communicate with the channel 3 via a duct 38. From the cavity 37 there extends at least one duct 39 (two in Figure 1) terminating on the outside of the member 35 in an annular cavity 40 provided between this latter and the chamber 11. Said cavity 40 is connected to the duct 15.

In the outer surface 41 of the member 35 there is an annular seat 42 containing a seal ring 42A which cooperates with the wall of the chamber 11.

The thread 36 is provided on the surface 41 and cooperates with a corresponding thread provided on the wall of the chamber 11.

A needle valve 43 is mobile within the cavity 37 of the member 35 and comprises a threaded portion 43A arranged to cooperate with a corresponding thread provided on the wall of the cavity 37. The valve 43 has a substantially cone-shaped end 44 cooperating with the duct 38, an annular circumferential seat 45 cooperating with a seal member 46, and a widened end 47 in which a seat 48 is provided for bayonet (or similar) coupling to the output shaft 49 of the motor 30. This shaft has a flat portion 49A able to cooperate suitably with the seat 48 in order to torsionally secure the valve 43.

The enlarged end 47 of each valve 43 of each flowmeter F is positioned within a cavity 50 of a support block 51 to which the motor 30 is fixed by screws 52.

One end 53 of the block 51 is provided, coaxial to the chamber 11 of the distributor block 1, with a through hole 54 communicating with the cavity 50 and opening into an end side 55 of the block which rests under sealed conditions against the distributor block 1.

The hole 54 has a threaded wall which cooperates with the thread on the member 35, to allow this latter and the block 51 to be removably connected together.

The end 53 of this latter comprises at least one threaded circumferential portion 56 arranged to cooperate with a nut 58 for fixing the block 51 against the distributor block 1. To provide the necessary seal, the nut 58 operates on a seal ring 60 which cooperates with said distributor block at the end 53 of the support block 51.

This latter comprises a peripheral annular recess 63 containing a seal ring 64.

The block 51 is inserted into a hollow cylindrical body 65 which also contains the motor 30 and against the inner wall 66 of which said ring 64 seals.

At the end 67 of the body 65 there is an aperture 68 through which the power cables 70 and 71 for the motor 30 pass, said cables being inserted into a sheath 72.

Said cables are connected to the control unit 31, to which are connected all the flow evaluation units 9 associated with the sensors 8 of each flowmeter F.

The control unit 31 comprises an interface 75 by which the operator can manually control the flowmeter motors 30 or set the unit, which is advantageously of microprocessor type.

This unit also comprises a display unit 77, showing the flow values measured by each flowmeter F, either in a preset sequence or as specifically requested by the operator.

Figure 2 shows how pluralities of flowmeters connected into different lines C of a lubricating circuit K are controlled by different units 31.

These latter are connected to a remote control and monitoring unit 90, for example a usual processor provided with a monitor 91 and keyboard 92.

Each flowmeter F can be remotely controlled by this latter.

It will be assumed that the system of the invention is to be used for simultaneously lubricating different parts of a machine under continuous cycle operation, for example in a paper mill.

A suitable known quantity of lubricant fluid circulates through each line C.

At each flowmeter F connected into a line C, the lubricant fluid passes through the channel 3 and from there into the duct 38.

Assuming that the valve 43 has been opened, ie that its end 38 has been withdrawn from the duct 38, the lubricant fluid passes from the duct 38 into the cavity 37 of the member 35. From there the fluid passes via the ducts 39 into the cavity 40, and from there into the duct 15. From this latter it passes in known manner into the measurement block 5 to move the rotor 7. From the block 5 the fluid returns to the block 1 and leaves this to pass into the terminal line L.

The movement of the rotor 7 is a function of the quantity of fluid passing through the measurement block 5. This movement is sensed by the sensor 8, which feeds its data to the evaluation unit 9.

This latter, using a suitable known comparison algorithm, determines the rate of lubricant fluid flow to the user through the line L as a function of the rotational speed of the rotor 7.

The unit 9 then feeds its data to the control unit 31.

This latter then evaluates the flow data from the evaluation units 9 connected to all the flowmeters F in the line C and compares them, using a usual algorithm, with values fed via the interface 75.

The flow rate values for each flowmeter F can hence be determined in a simple and reliable manner. An approximate evaluation of the flow rate can however be obtained visually by observing the block 5, the top 5A of which is transparent. The movement of the rotor 7 can be seen through this transparent section, its speed then allowing a rough estimate of the rate through the flowmeter F by comparing this speed with tat of the other flowmeters F in the same line C.

On the basis of the determined flow data, the unit 31 can automatically act on any flowmeter F whenever the fluid through it has a flow rate different from the desired value.

It will now be assumed that in one flowmeter, for example that indicated by F1 in Figure 2, the lubricant fluid flow rate is different from the preset value.

By way of the unit 9, the control unit 31 determines the difference between the measured value (real value) and the set value (desired value).

The control unit then operates on the motor 30 using a suitable determined algorithm, to rotate its output shaft 49.

The rotation of this shaft causes rotation of the needle valve 43, the threaded portion 43A of which engages in the corresponding thread present on the wall of the cavity 37.

The rotation of the valve hence results in its thread 43A screwing inwards or outwards within the thread of the cavity 37, with consequent closure or opening of the valve 43, the end 44 of which approaches or withdraws from the duct 38.

This results in greater or lesser throttling of the flow of lubricant fluid directed from the channel 3 to the duct 15 and hence to the user via the line L.

As the closing and opening movement is achieved by the cooperation of two threaded parts (ie by the inward or outward screwing of the valve within the member 35), this movement is very precise and allows very accurate adjustment of the flow or fluid directed towards the line L.

Moreover, as the coupling between the motor shaft 49 and the needle valve 43 is of bayonet type (or the like), when the motor 30 requires maintenance it can be removed from the valve without having to interrupt the lubricant flow through the channel 3. To achieve this, the valve 43 must be screwed down into the member 35, the body 65 removed (this being for example press-fitted onto the block 5) and then the screws 52 which fix the motor 30 to the block 51 removed. Having done this, the motor is moved axially (arrow M of Figure 1) to extract the shaft 49 from the end 47 of the valve 43. The motor can then be completely detached from the corresponding flowmeter.

In the described embodiment, the units 9 are separate from the control unit 31. However, if advantageously this is of microprocessor type, the units 9 connected to the sensors 8 of the flowmeters F can be incorporated into said microprocessor circuit, with considerable advantage to the construction of the system.

As stated, several control units 31 are connected to a remote control and monitoring unit 90 by which an operator can remotely monitor the correct operation of the flowmeters F.

If their operation is incorrect or if the flow rate through one of the flowmeters falls below a given value (prealarm or alarm threshold), an acoustic and/or visual signal is generated indicating an unacceptable flowmeter state. Using the interface 92 and monitor 91, the operator determines which flowmeter is malfunctioning, and uses the relative control unit 31 to adjust said flowmeter, for example by closing the needle valve 43.

A system constructed in accordance with the invention provides continuous monitoring of the operation of each flowmeter in a lubricant fluid feed line directed for example to user points in continuously operating machines.

The system is simple to handle and results in a considerable reduction in operating costs and in the cost of lubricating a plurality of users.

Moreover, the flowmeter valve units can be regulated very precisely, to achieve lubricant fluid flows to the users which are as close as possible to the optimum desired values.

## Claims

1. A system for distributing lubricant fluid to several users via a plurality of modular flowmeters arranged in one and the same distribution line (C) for said fluid, each of said flowmeters comprising a distributor block provided with entry and exit ports and ducts for delivery to and return from a measurement block comprising a chamber within which an orbiting member moves, said distributor block being provided with a valve unit for regulating the fluid flow to the measurement block, each distributor comprising usual sensor means for measuring the movement of the member orbiting within the measurement block and being connected to an evaluation unit which on the basis of signals generated by the system means is able to determine the flow rate of the fluid passing through the distributor block and directed towards a corresponding user connected to said return duct, characterised that the valve units (12) of the flowmeters (F) are connected to and controlled by corresponding electric motors (30), these latter being controlled and operated by at least one control unit (31) to which said evaluation units (9) are connected, said control unit (31) receiving from these latter the flow data measured by each individual flowmeter (F) and, on the basis of these data, acting on the valve units (12) of these latter in such a manner as to modify the flow rate of the lubricant fluid fed through said flowmeters to the corresponding users.

2. A system as claimed in claim 1, characterised in that the control unit (31) is connected to a remote control unit (90) by which each flowmeter (F) connected to said control unit (31) can be remotely controlled.

3. A system as claimed in claim 1, characterised in that the remote control unit (90) comprises a monitor (91) and an interface (92).

4. A system as claimed in claim 1, characterised in that the valve unit of each flowmeter (F) comprises a hollow member (35) arranged in a chamber (11) connected to the port (3) for the entry of lubricant fluid into the flowmeter (F) and to the duct (15) for the delivery of said fluid to the measurement block (5), said chamber (11) opening on the outside of the distributor block (1), said member comprising a duct (38) arranged to connect said entry port (3) to an internal cavity (37) thereof within which a needle valve (43) is mobile, from said internal cavity (37) there extending at least one duct (39) opening on the outside of said member (35) so as to enable the lubricant fluid to pass from the entry port (3) to the delivery duct (15).

5. A system as claimed in claim 4, characterised in that the duct (38) which connects the internal cavity (37) of the member (35) containing the needle valve (43) to the entry port (3) can be at least partly closed by one end (44) of said valve.

6. A system as claimed in claim 4, characterised in that the needle valve (43) has a threaded portion (43A) arranged to cooperate with a corresponding threaded part of the wall of the internal cavity (37) of the member (35) containing said valve.

7. A system as claimed in claims 1 and 4, characterised in that the needle valve (43) has one end (47) arranged to cooperate torsionally with the output shaft (49) of the electric motor (30), this latter being of the direct current and advantageously stepping type.

8. A system as claimed in claim 7, characterised in that the end (47) of the needle valve (43) comprises a seat (48) into which the output shaft (49) of the electric motor (30) can be bayonet-fitted.

9. A system as claimed in claim 7, characterised in that that end (47) of the needle valve (43) cooperating with the output shaft (49) of the electric motor (30) moves within a cavity (50) in a support block (51) to which said motor is removably fixed, said block (51) being removably associated with the member (35) containing the needle valve (43).

10. A system as claimed in claim 9, characterised in that the support block (51) is secured to the member (35) containing the needle valve (43) by a threaded connection.

11. A system as claimed in claim 10, characterised in that the support block (51) has one end (53) provided with a through hole, the wall of which is at least partly threaded to cooperate with a thread (36) on the member (35) containing the needle valve (43), said end having at least one circumferentially threaded external portion arranged to cooperate with a nut (58) which compresses a seal element (60) against the distributor block (1) of the flowmeter (F), said through hole (54) of the support block (51) being coaxial with the distributor block chamber (11) containing the valve unit (12).

12. A system as claimed in claim 1, characterised in that the control unit (31) is a microprocessor circuit.

13. A system as claimed in claim 12, characterised in that the microprocessor circuit also incorporates the data evaluation units connected to the sensor means (8) of the flowmeters (F).

14. A system as claimed in claim 12, characterised in that the control unit (31) comprises a display unit (77) which, either in sequence or in accordance with a precise request, displays the flow rates of the flowmeters (F) connected to said unit.

15. A system as claimed in claims 12 and 13, characterised in that the control unit (31) comprises an interface (75) allowing any of the flowmeters (F) connected to said unit to be controlled.

16. A system as claimed in claim 1, characterised by comprising a series of lines (C) of a lubrication circuit (K), in each of which there is arranged a plurality of flowmeters (F), the valve units of which are operated by direct current electric motors connected to a control unit (31), the number of these latter being equal to the number of said lines (C), said control units being connected to at least one remote control unit (90) by which each flowmeter (F) can be remotely controlled.

Fig. 1

Fig. 2